# EUROPEAN PATENT APPLICATION

(11) **EP 1 335 297 A1**
(43) Date of publication of application: **13.08.2003**
(21) Application number: 02017513.9
(22) Date of filing: 02.08.2002
(51) Int. Cl.: G06F 15/02, A44C 23/00

(54) **Mobile terminal with rosary display**

(30) Priority: 06.02.2002 KR 2002006817
(71) Applicant: LG ELECTRONICS INC., Seoul (KR)
(72) Inventor: Kim, Sang-Jin, Gwanak-Gu, Seoul (KR)
(74) Representative: Urner, Peter, Dipl.-Phys.

(57) **Abstract**

A folding type mobile terminal with a rosary display is provided. The mobile terminal comprises a key pad, a folding member, a main display located on the inner surface of the folding member, and a rosary display located on the outer surface of the folding member. The rosary display facilitates the recitation of rosary prayers by tracking the number and progression of prayers recited. Also, a secondary display screen displays the time, number and length of prayers. Consequently, the user need not carry a set of rosary beads.

## Description

### BACKGROUND OF THE INVENTION

### 1. Field of the Invention

The present invention relates to a mobile terminal in a mobile communication system, and more particularly, to a mobile terminal with a rosary display which facilitates the recitation of a rosary prayer.

### 2. Description of the Background Art

The rosary is a form of prayer, particularly in the Catholic religion, and often consists of a loop of an exact number of beads. Most Catholics use rosary beads to count their prayers. Each bead represents a prayer and the individual praying touches that bead as the prayer is recited. Typically, rosaries consist of five sets of ten beads where each set is a decade. One decade (set of ten beads) is prayed for each Mystery, of which there are fifteen total mysteries. Generally, five mysteries are prayed throughout a day.

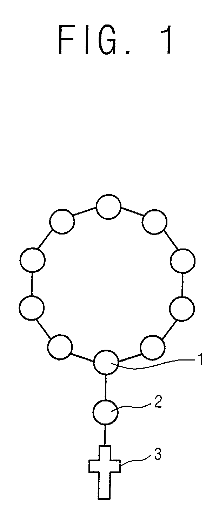

Figure 1 illustrates a simplified rosary. The rosary in Figure 1 comprises a holy cross 3 (where one may recite the "Apostle's Creed"); an invitatory bead 2 where "Our Father," the initial Hail Mary's, "Glory be to the Father" and/or the announcement of the first mystery may be recited; and a set of ten beads, where each bead 1 signifies the recitation of one of the ten Hail Mary's or other prayers.

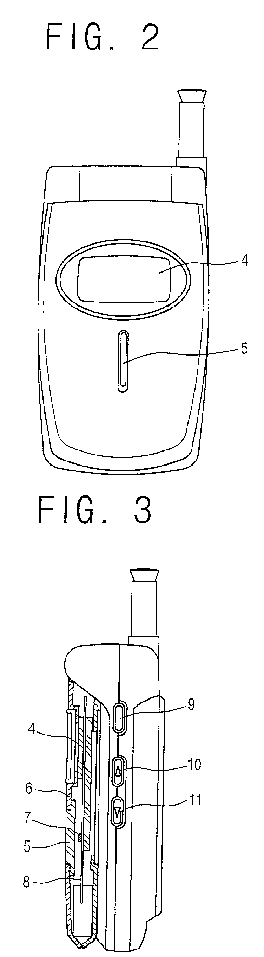

Figure 2 illustrates a frontal view of a conventional mobile terminal of the folding type. The folding type mobile terminal in Figure 2 includes a secondary liquid crystal display (LCD) 4, on which date, time, and battery consumption are generally displayed. As shown, the display 4 is located on the outer surface of the folding type mobile terminal along with an indicator 5 used for signaling the origination/termination of a call on the terminal.

Figure 3 illustrates a partial cross-sectional side view of the folding type mobile terminal of Figure 2. In Figure 3, the inner structure of a first portion of the folding type mobile terminal which contains the secondary LCD display 4 and indicator 5 is shown. This first portion of the folding type mobile terminal further includes a light emitting diode (LED) 7 used for radiating a light to effectuate the indicator 5; a liquid crystal display printed circuit board (LCD PCB) 8 for supporting and controlling the LED 7; and a case 6. A second portion of the folding type mobile terminal includes a menu setting button 9; an up button 10 for manipulating a function featured by the folding type mobile terminal, such as turning up the volume; and a down button 11 for further manipulation.

As a means of facilitating and consequently encouraging the act of praying, rosaries or rosary beads have become an essential part of the Catholic religion. Unfortunately, there are practicing Catholics who do not carry rosary beads on their persons, usually as a result of inconvenience. Today many individuals, including practicing Catholics, are forced to carry several personal belongings, such as mobile communication devices, personal digital assistants, wallets, etc. Consequently, certain items, such as rosary beads, are relegated as extraneous and are not carried personally, Therefore, a solution is needed which allows a practicing Catholic to perform rosary prayers without having to carry "extraneous" items on his person.

### SUMMARY OF THE INVENTION

The present invention is directed to a mobile terminal with a rosary display system.

Additional features and advantages of the invention will be set forth in the description which follows, and in part will be apparent from the description, or may be learned by practice of the invention. The objectives and other advantages of the invention will be realized and attained by the structure particularly pointed out in the written description and claims hereof as well as the appended drawings.

A mobile terminal, in accordance with one aspect of the invention, comprises a terminal main body including a key pad, a folding member, which is coupled to the terminal main body using a hinge, having inner and outer surfaces, a main display located on the inner surface of the folding member, and a rosary display located on the outer surface of the folding member. A secondary display may be located on the outer surface of the folding member adjacent to the rosary display in some embodiments.

According to another aspect of the invention, the rosary display has a first light emitting source in the shape of a holy cross, a second light emitting source located above the first light emitting source, and a plurality of light emitting sources located above the second light emitting source and arranged in a circle. Some or all of the light emitting sources can be LED's. According to another aspect of the invention, the mobile terminal includes one or more buttons to manipulate the rosary display.

In another embodiment of the present invention, the mobile terminal comprises a body having front and back surfaces, a key pad located on the front surface of the body, a main display located on the front surface of the body, and a rosary display located on the back surface of the body.

It is to be understood that both the foregoing general description and the following detailed description are exemplary and explanatory and are intended to further describe the invention as claimed.

### BRIEF DESCRIPTION OF THE DRAWINGS

The accompanying drawings, which are included to provide a further understanding of the invention and are incorporated in and constitute a part of this specification, illustrate embodiments of the invention and, together with the description, serve to explain the principles of the invention.
Figure 1 illustrates a simplified rosary;
Figure 2 illustrates a planar front view of a conventional folding type mobile terminal according to the conventional art;
Figure 3 illustrates a partial cross-sectional side view of a conventional folding type mobile terminal according to the conventional art;
Figure 4 illustrates a planar front view of a folding type mobile terminal including a rosary display according to the present invention;
Figure 5 illustrates a partial cross-sectional side view of the folding type mobile terminal of Figure 4;
Figures 6A and 6B illustrate respective planar front and side views of the display components of a folding type mobile terminal including a rosary display according to the present invention; and
Figure 7A illustrates a planar front surface view of the rosary LED indicators of the folding type mobile terminal including a rosary display according to the present invention.
Figure 7B illustrates a cross-sectional side view of the rosary LED indicators of the folding type mobile terminal including a rosary display according to the present invention.
Figure 7C illustrates a planar front sub-surface view of the rosary LED indicators of the folding type mobile terminal including a rosary display according to the present invention.

Features, elements, and aspects of the invention that are referenced by the same numerals in different figures represent the same, equivalent, or similar features, elements, or aspects in accordance with one or more embodiments.

Reference will now be made in detail to one or more embodiments of the invention, examples of which are illustrated in the accompanying drawings.

### DETAILED DESCRIPTION OF THE PREFERRED EMBODIMENTS

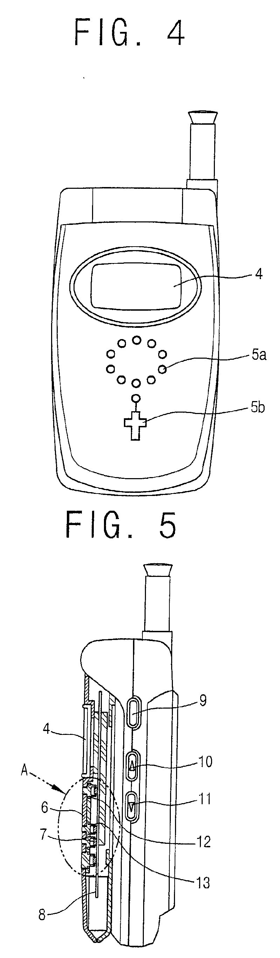

Figure 4 illustrates a folding type mobile terminal, in accordance with one embodiment of the invention, with a secondary LCD display 4 preferably located above a rosary display. The rosary display preferably consists of an arrangement 5a of 10 LED indicators and a single invitatory LED indicator and an LED indicator 5b in the shape of a cross, for example.

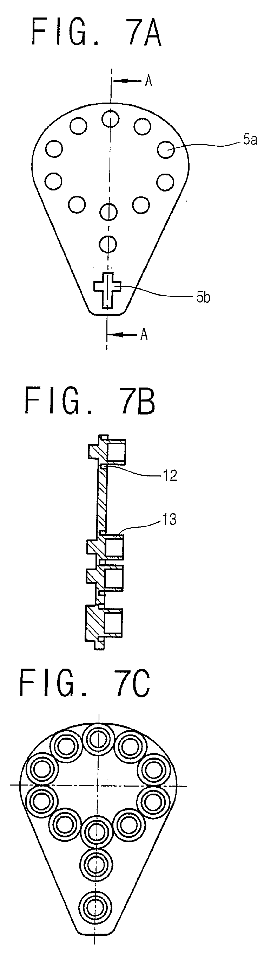

Referring to Figure 5, a first portion of the folding type mobile terminal of the invention comprises the secondary LCD display 4, an LED 7, an LCD PCB 8 for supporting and controlling a plurality of LED's, a main LCD display located beneath the surface of the first portion (not indicated) and the case 6. The LED 7 resides in a recess 13. A collar 12, located on the perimeter of the open end of the recess, further focuses the light discharged by the LED. The collar 12 and the recess 13 can be seen in greater detail in Figure 7b. The second portion of the folding type mobile terminal according to the present invention includes a menu setting button 9; an up button 10 for manipulating a function featured by the folding type mobile terminal, such as turning up the volume; and a down button 11 for further manipulation of the mobile terminal. Components of the first portion encircled as Section A are illustrated in greater detail in Figure 7.

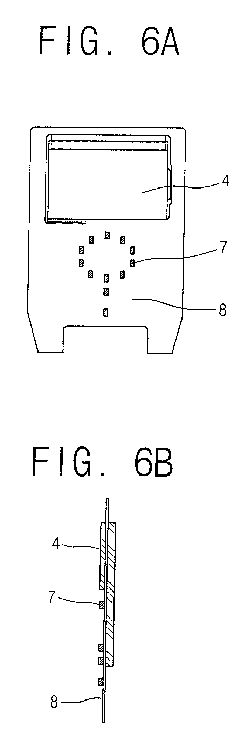

Figures 6A and 6B illustrate planar front and cross-sectional side views, respectively, of the display components of the folding type mobile terminal including a rosary display according to the present invention. These views allow a more simplistic view of the arrangement of the secondary LCD display 4, the LED 7, and the LCD PCB 8.

Figure 7A illustrates the arrangement of the LED's 5a and 5b as seen on the outer surface of the mobile terminal. Figure 7B illustrates a cross sectional side view of the arrangement, showing in further detail the collar 12 and recess 13 that the LED's reside in. Finally, Figure 7C illustrates a sub-surface planar front view of the arrangement of LED's as seen beneath the surface of the mobile terminal.

Hereinafter, an exemplary method for operation of the present invention will be described with reference to Figures 4 -7.

A user of the folding type mobile terminal of the present invention pushes, for example, a menu setting button 9 for a certain period of time to activate a first menu. The menu provides various options regarding, for example, the type, length and/or number of prayers that appear on the LCD display 4 or on the main LCD display (not indicated). The user would then be able to manipulate and set the type, length and/or number of prayers using the up button 10 and/or the down button 11, for example. When the type, length, and/or number of prayers are set, the user of the mobile terminal can store the setting by pushing, for example, the menu setting button 9 or any other predetermined button or sequence of buttons, and begin the recitation of prayers. Accordingly, the arrangement of LED's 5a and 5b is activated with, for example, each LED flashing sequentially according to the type, length and/or number of prayers selected. The time, length and/or number of prayers may also be displayed on the secondary LCD display 4 during the time of recitation, in one or more embodiments of the invention.

In certain embodiments, the invitatory bead LED (the single LED located between the set of 10 LED's and the LED in the shape of a holy cross) can also be used as a battery charge indicator. In other embodiments, the holy cross shaped LED can also serve as call origination/termination indicator. In some embodiments, the mobile terminal can be of a monolithic construction, where the rosary display can be located on the back surface of the terminal, for example.

As such, the present invention relieves the a mobile phone user of the responsibility of carrying a set of rosary beads.

It will be apparent to those skilled in the art that various modifications and variations can be made in the present invention without departing from the spirit or scope of the invention. Thus, it is intended that the present invention cover the modifications and variations of this invention provided they come within the scope of the appended claims and their equivalents.

## Claims

1. A folding type mobile terminal comprising:
a main body including a key pad;
a folding member, which is coupled to the terminal main body using a hinge, having inner and outer surfaces;
a main display located on the inner surface of the folding member; and
a rosary display located on the outer surface of the folding member.

2. The mobile terminal of claim 1 further comprising a secondary display located on the outer surface of the folding member.

3. The mobile terminal of claim 1, wherein the rosary display comprises:
a first light emitting source in the shape of a holy cross;
a second light emitting source located above the first light emitting source; and
a plurality of light emitting sources located above the second light emitting source and arranged in a circle.

4. The mobile terminal of claim 3, wherein the first, second and plurality of light emitting sources are LED's.

5. The mobile terminal of claim 4, wherein the second light emitting source represents an invitatory bead of a rosary.

6. The mobile terminal of claim 5, wherein the plurality of light emitting sources comprises ten LED's.

7. The mobile terminal of claim 1 further comprising one or more buttons for controlling the rosary display.

8. The mobile terminal of claim 7, wherein the one or more buttons comprise a menu setting button for manipulating the time, length and number of rosary prayers, and one or more direction buttons.

9. The mobile terminal of claim 7, wherein the one or more buttons are disposed on the main body.

10. The mobile terminal of claim 7, wherein the one or more buttons are disposed on the outer surface of the folding member.

11. The mobile terminal of claim 3, wherein the first light emitting source is a call termination or origination indicator.

12. A mobile terminal comprising:
a body having front, back, and first and second side surfaces;
a keypad located on the front surface;
a first display located on the front surface; and
a first rosary display located on the back surface.

13. The mobile terminal of claim 12, further comprising a second display located on the back surface.

14. The mobile terminal of claim 12, wherein the rosary display comprises:
a first light emitting source in the shape of a holy cross;
a second light emitting source located approximately above the first light emitting source; and
a plurality of light emitting sources located approximately above the second light emitting source and arranged in a circle.

15. The mobile terminal of claim 14, wherein the first, second and plurality of light emitting sources are LED's.

16. The mobile terminal of claim 15, wherein the second light emitting source represents an invitatory bead of a rosary.

17. The mobile terminal of claim 16, wherein the plurality of light emitting sources comprises ten LED's.

18. The mobile terminal of claim 12 further comprising one or more buttons in order to control the rosary display.

19. The mobile terminal of claim 18, wherein the one or more buttons comprise a menu setting button for manipulating the time, length and number of rosary prayers, and direction buttons.

20. A method of operating a mobile terminal with a rosary display to recite rosary prayers, comprising:
activating a first menu on the mobile terminal;
programming one or more visual displays that facilitate the recitation of rosary prayers; and
reciting rosary prayers based on changes in the one or more visual displays.

21. The method of claim 20, wherein activating the first menu comprises interacting with one or more buttons located on the mobile terminal.

22. The method of claim 20, wherein programming the one or more visual displays comprises the steps of:
interacting with one or more buttons located on the mobile terminal to configure values associated with time, length and number of the rosary prayers; and
storing the configured values by interacting with one or more buttons located on the mobile terminal.

23. The method of claim 20, wherein changes in the visual display comprise consecutive activation of lights of the rosary display.
